# EUROPÄISCHE PATENTSCHRIFT

(11) **EP 1 610 991 B1**
(45) Veröffentlichungstag und Bekanntmachung des Hinweises auf die Patenterteilung: **30.08.2006**
(21) Anmeldenummer: 04726182.1
(22) Anmeldetag: 07.04.2004
(51) Int. Cl.: B60T 7/10, B60T 13/74

(54) **VORRICHTUNG UND VERFAHREN ZUM BETRIEB EINER FESTSTELLBREMSE FÜR KRAFTFAHRZEUGE**
DEVICE AND METHOD FOR OPERATING A MOTOR-VEHICLE PARKING BRAKE
PROCEDE ET DISPOSITIF POUR FAIRE FONCTIONNER UN FREIN DE STATIONNEMENT DE VEHICULE

(30) Priorität: 08.04.2003 DE 10315970; 29.03.2004 DE 102004015710
(43) Veröffentlichungstag der Anmeldung: 04.01.2006
(73) Patentinhaber: Continental Teves AG & Co. oHG, 60488 Frankfurt am Main (DE)
(72) Erfinder: KLUSEMANN, Rainer, 60529 Frankfurt am Main (DE); BÜSE, Axel, 60437 Frankfurt am Main (DE); STASTNY, Karel, 65936 Frankfurt am Main (DE); HINN, Mirco, 60320 Frankfurt am Main (DE)
(86) Internationale Anmeldenummer: PCT/EP2004/050471
(87) Internationale Veröffentlichungsnummer: WO 2004/089711

(56) Entgegenhaltungen:
- EP-A- 0 976 634
- WO-A-20/04000618
- US-A- 5 922 038
- US-B1- 6 406 102

## Beschreibung

Die vorliegende Erfindung betrifft ein Verfahren zum Betrieb einer elektromechanisch betätigbaren und/oder elektromechanisch verriegelbaren Feststellbremse für Kraftfahrzeuge, die im wesentlichen aus einem Bedienelement, einer elektronischen Steuereinheit, der Raddrehzahlwerte von Raddrehzahlsensoren zugeführt werden, mindestens einer Einheit zur Erzeugung einer Zuspannkraft und mechanisch verriegelbaren Bremseinrichtungen an wenigstens einer Achse besteht, wobei die Bremseinrichtungen durch die Einheit zuspannbar sind. Außerdem betrifft die Erfindung eine Feststellbremse für Kraftfahrzeuge zur Durchführung des Verfahrens.

Aus der DE 198 34 129 Cl ist eine Feststellbremse für Kraftfahrzeuge bekannt, die wenigstens an zwei Radbremsen jeweils einen Aktuator vorsieht, der die ihm zugeordnete Radbremse mittels eines Kabelzugs zuspannt. Außerdem ist aus der genannten Schrift ein Verfahren zur Betätigung einer Feststellbremse bekannt, wonach die Zuspannkraft des Aktuators in Abhängigkeit von der Geschwindigkeit des Kraftfahrzeuges abhängt und darüber hinaus ein Blockieren der durch den Aktuator abgebremsten Räder verhindert. Als weniger vorteilhaft ist bei dem vorbekannten Verfahren anzusehen, dass das Verfahren ohne Raddrehzahlwerte, die sowohl die Geschwindigkeit des Kraftfahrzeugs repräsentieren als auch ein mögliches Blockieren der durch den Aktuator gebremsten Räder offen legen, nicht durchführbar ist.

Aus der deutschen Offenlegungsschrift DE 198 36 687 A1 ist eine elektronische Feststellbremsanlage sowie ein Verfahren zu deren Betrieb bekannt. Dabei wird die Fahrzeuggeschwindigkeit der elektronischen Feststellbremsanlage als Eingangssignal zugeführt, um die Fahrsituation des Kraftfahrzeugs zu ermitteln. Wenn die Raddrehzahlwerte der Kraftfahrzeugräder jedoch nicht zur Verfügung stehen, kann das offenbarte Verfahren nicht durchgeführt werden.

Der vorliegenden Erfindung liegt daher die Aufgabe zu Grunde, ein Verfahren zum Betrieb einer elektromechanischen Feststellbremse für Kraftfahrzeuge darzustellen, das bei fehlenden Raddrehzahlwerten zuverlässig arbeitet, damit das Fahrverhalten des Kraftfahrzeugs für den Fahrzeugführer beherrschbar bleibt.

Diese Aufgabe wird verfahrensmäßig dadurch gelöst, dass die Feststellbremse nach ihrer Aktivierung bei fehlenden Raddrehzahlwerten in einem ersten Betriebsmodus angesteuert wird, sofern die Bremseinrichtungen nicht zugespannt sind, während die Feststellbremse andernfalls in einem zweiten Betriebsmodus angesteuert wird.

Bei einer vorteilhaften Weiterbildung des erfindungsgemäßen Verfahrens wird die Feststellbremse in einem ersten Betriebsmodus angesteuert, sofern im vorangegangenen Betriebsintervall bereits fehlende Raddrehzahlwerte erkannt wurden.

Außerdem ist vorgesehen, dass die Feststellbremse in einem ersten Betriebsmodus angesteuert wird, sofern der Fahrzeugführer der Feststellbremse nicht den zweiten Betriebsmodus zuordnet.

Ein vorteilhafte Weiterbildung sieht vor, dass die Feststellbremse in einem zweiten Betriebsmodus angesteuert wird, wenn der Fahrzeugführer die Zündung abschaltet und das Bedienelement länger als eine vorbestimmte Zeitspanne betätigt.

Bei einer weiteren vorteilhaften Weiterbildung wird die Feststellbremse in einem zweiten Betriebsmodus angesteuert wird, wenn der Fahrzeugführer die Zündung abschaltet und den Zündschlüssel mindestens für eine vorbestimmte Zeitspanne aus dem Zündschloss entnimmt.

Bei allen Ausführungen und Weiterbildungen ist vorgesehen, dass die Zuspannkraft der Feststellbremse im ersten Betriebsmodus ausschließlich während der Betätigung des Bedienelementes aufgebaut und aufrechterhalten wird und dass die Feststellbremse im zweiten Betriebsmodus bei Betätigung des Bedienelementes mit maximal zulässiger Kraft zugespannt wird, wobei ein Lösen lediglich mittels erneuter Betätigung des Bedienelements bei eingeschalteter Zündung möglich ist.

Außerdem wird die Aufgabe erfindungsgemäß dadurch gelöst, dass Mittel vorgesehen sind, die die Feststellbremse nach ihrer Aktivierung bei fehlenden Raddrehzahlwerten in einem ersten Betriebsmodus ansteuern, sofern die Bremseinrichtungen nicht zugespannt sind, während die Feststellbremse andernfalls in einem zweiten Betriebsmodus angesteuert wird.

Außerdem ist eine Kontrolllampe vorgesehen, die den Fahrzeugführer darüber informiert, ob die Feststellbremse im ersten oder im zweiten Betriebsmodus angesteuert wird.

Die Erfindung wird nachfolgend im Zusammenhang mit der beiliegenden Zeichnung näher erläutert. In der Zeichnung zeigen:
- Fig.1: ein schematisch dargestelltes Schaltbild eines hydraulischen Bremssystems, das eine elektromechanische Stelleinheit zur Durchführung von Feststellbremsvorgängen aufweist,
- Fig. 2: ein Diagramm, das auf der Abszisse die Betätigungszeit des Bedienelements und auf der Ordinate die durch die elektromechanische Stelleinheit aufgebrachte Kraft darstellt.

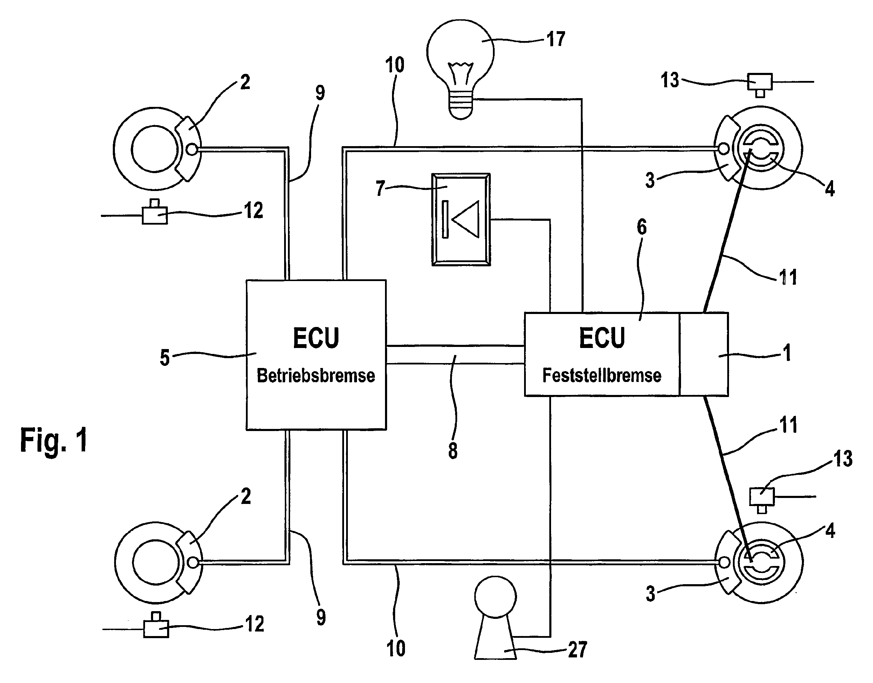

In Fig. 1 ist ein Schaltbild einer hydraulischen Bremsanlage schematisch dargestellt. Die hydraulische Bremsanlage weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung (ABS) sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist dem Betriebsbremssystem zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer- und Regeleinheit 5 zugeführt. Außerdem weisen die Räder der Hinterachse neben den Radbremsen 3 für Betriebsbremsungen auch eine elektromechanische Feststellbremse auf. Die elektromechanische Feststellbremse weist zwei mechanisch verriegelbare Bremseinrichtungen 4, die als Trommelbremsen 4 mit jeweils einem nicht näher dargestellten Spreizschloss ausgebildet sind, auf. Das eben genannte Spreizschloss ist mittels eines Kabelzugs 11 von einer elektromechanischen Stelleinheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Stelleinheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die als CAN-Verbindung ausgebildet ist.

Wie vom Gesetzgeber gefordert, müssen die Trommelbremsen 4 auch während der Fahrt des Kraftfahrzeugs zuspannbar sein, um dem Fahrzeugführer nach einem möglichen Ausfall der Betriebsbremsanlage eine Notbremsfunktion zur Verfügung zu stellen. Dabei wird die elektromechanische Feststellbremse in zwei verschiedenen Betriebsmodi angesteuert, einem dynamischen und einem statischen Betriebsmodus. Während eines Stillstands des Kraftfahrzeugs werden bei einer Betätigung des Bedienelementes 7 durch den Fahrzeugführer die Trommelbremsen 4 mit Hilfe der elektromechanischen Stelleinheit 1 komplett zugespannt und diese Zuspannkraft aufrecht erhalten. Dazu weist die elektromechanische Stelleinheit 1 ein nicht dargestelltes selbsthemmendes Getriebe auf. Eine Aufhebung der aufgebrachten Zuspannkraft ist lediglich mittels einer erneuten Betätigung des Bedienelementes 7 bei gleichzeitig eingeschalteter Zündung möglich. Dieses Bremsverhalten wird im Folgenden als zweiter oder als statischer Betriebsmodus der elektromechanischen Feststellbremse bezeichnet. Befindet sich das Kraftfahrzeug dagegen in einem Fahrzustand mit einer Fahrgeschwindigkeit größer als eine vorbestimmte Schwelle von vorzugsweise 3 km/h, so werden die Trommelbremsen 4 nur so lange zugespannt und die aufgebrachte Zuspannkraft aufrecht erhalten, wie der Fahrzeugführer das Bedienelement 7 betätigt. Sobald der Fahrzeugführer das Bedienelement 7 nicht mehr betätigt, befindet sich das Kraftfahrzeug wieder in einem ungebremsten Zustand. Dieses Bremsverhalten der elektromechanischen Feststellbremse wird im Folgenden als erster oder als dynamischer Betriebsmodus bezeichnet. Wird die elektromechanische Feststellbremse im dynamischen Betriebsmodus angesteuert, so ist es also nicht möglich, das Kraftfahrzeug mit Hilfe der elektromechanischen Feststellbremse zu parken.

Zur Entscheidung zwischen statischem und dynamischem Betriebsmodus zur Ansteuerung der elektromechanischen Feststellbremse werden die Signale der Raddrehzahlsensoren 12, 13 in der dem Betriebsbremssystem zugeordneten elektronischen Steuer- und Regeleinheit 5 überwacht und an die der Feststellbremse zugeordnete elektronische Steuereinheit 6 übergeben. Wird bei fahrendem Kraftfahrzeug fälschlicherweise ein statischer Betriebsmodus gewählt, so kann das aus dem statischen Betriebsmodus resultierende, vollständige Blockieren der Räder der Hinterachse zu einem für den Fahrzeugführer nicht mehr kontrollierbaren Verhalten des Kraftfahrzeugs führen.

Bei fehlenden Signalen der Raddrehzahlsensoren 12, 13 oder unterbrochener Datenleitung 8 stehen der der Feststellbremse zugeordneten elektronischen Steuereinheit 6 keine Raddrehzahlwerte mehr zur Verfügung und der elektronischen Steuereinheit 6 steht bei Betätigung des Bedienelementes 7 durch den Fahrzeugführer kein Entscheidungskriterium zur Verfügung, ob die Feststellbremse im statischen oder im dynamischen Betriebsmodus angesteuert werden soll.

Das erfindungsgemäße Verfahren sieht vor, dass die elektromechanische Feststellbremse bei fehlenden Raddrehzahlwerten bis auf die unten folgenden Ausnahmen im dynamischen Betriebsmodus angesteuert wird. Dem Fahrzeugführer wird dieser Zustand über eine im Bereich der Armaturen angebrachte Lampe 17 vermittelt, die ständig blinkt. Wie in Fig. 1 dargestellt ist zu diesem Zweck die eben erwähnte Lampe 17 über eine gesonderte Leitung mit der der Feststellbremse zugeordneten elektronischen Steuereinheit 6 verbunden, damit die Information des Fahrzeugführers unabhängig von einem möglichen Ausfall der Datenverbindung 8 zwischen den beiden elektronischen Steuer- und Regeleinheiten 5, 6 ist. Ein schematisch angedeutetes Zündschloss 27 ist ebenfalls über eine gesonderte Leitung mit der der Feststellbremse zugeordneten elektronischen Steuereinheit 6 verbunden und es werden Informationen übermittelt, ob der Zündschlüssel im Zündschloss 27 steckt und ob die Zündung ein- oder abgeschaltet ist. Die elektromechanische Feststellbremse wird unter anderem durch ein Einschalten der Zündung in Betrieb genommen.

Wie bereits erwähnt wird die elektromechanischen Feststellbremse bei fehlenden Raddrehzahlwerten im dynamischen Betriebsmodus angesteuert, sofern nicht eine der folgenden Ausnahmen zutrifft. Der Betriebsmodus der elektromechanischen Feststellbremse ist nicht dynamisch, sofern nach Inbetriebnahme der elektromechanischen Feststellbremse die Trommelbremsen 4 zugespannt sind, d.h. sofern die durch einen nicht dargestellten Sensor gemessene Last der Kabelzüge 11 größer als eine Kraft von 100 N ist. Bei dieser Vorraussetzung wird angenommen, dass nach Inbetriebnahme, fehlenden Raddrehzahlwerten und einer Last der Kabelzüge 11, die größer als 100 N ist, angenommen, dass das Kraftfahrzeug aus dem sicher abgestellten Zustand in Betrieb genommen wird.

Die elektromechanische Feststellbremse wird bei fehlenden Raddrehzahlwerten ebenfalls nicht im dynamischen Betriebsmodus angesteuert, sofern nach Inbetriebnahme der elektromechanischen Feststellbremse kein Hinweis auf fehlende Raddrehzahlwerte im vorangegangenen Betriebsintervall in einer der beiden elektronischen Steuer- und Regeleinheiten 5, 6 abgelegt wurde. In diesem Fall wird für eine vorbestimmte Zeitspanne davon ausgegangen, dass das Kraftfahrzeug tatsächlich steht und aus dem sicher abgestellten Zustand in Betrieb genommen wird. Werden der elektronischen Steuereinheit 6 nach Ablauf der eben erwähnten vorbestimmten Zeitspanne immer noch keine Raddrehzahlwerte zugeführt, so wird die elektromechanische Feststellbremse im dynamischen Betriebsmodus angesteuert.

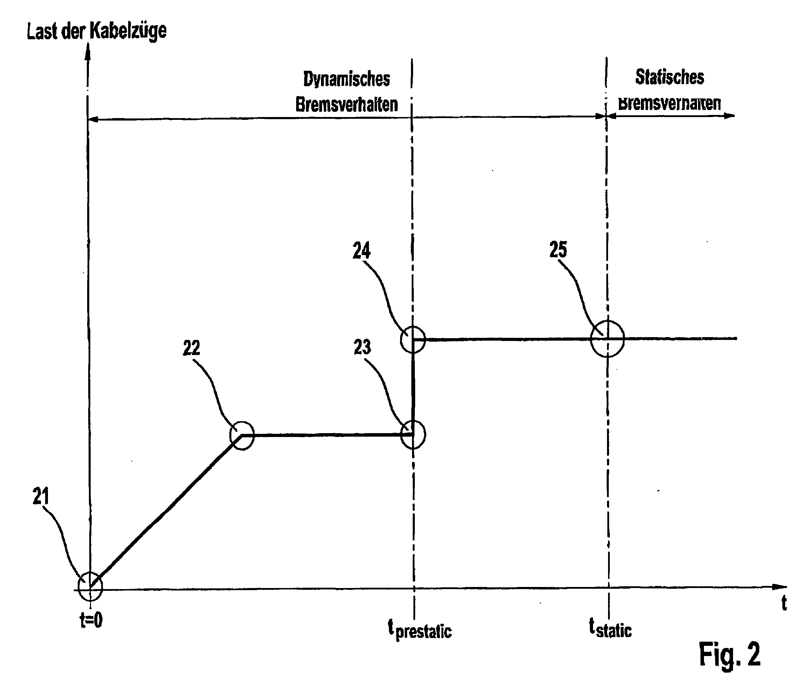

Außerdem wird die elektromechanische Feststellbremse bei fehlenden Raddrehzahlwerten ebenfalls nicht im dynamischen Betriebsmodus angesteuert, wenn der Fahrzeugführer den statischen Betriebsmodus wählt. Die Wahl des Fahrzeugführers erfolgt durch eine Betätigung des Bedienelementes 7, nachdem der Fahrzeugführer die Zündung abgeschaltet hat. Anhand des in Fig. 2 dargestellten Diagramms, das auf der Abszisse die Betätigungszeit t des Bedienelements 7 durch den Fahrzeugführer und auf der Ordinate die durch die elektromechanische Stelleinheit 1 aufgebrachte Last der Kabelzüge 11 darstellt, wird verdeutlicht wie der Fahrzeugführer vom dynamischen zum statischen Betriebsmodus der elektromechanischen Feststellbremse wechseln kann.

Wie die Position 21 in Fig. 2 verdeutlicht, ist die Last der Kabelzüge 11 vor der Betätigung des Bedienelementes 7 nahezu Null. Ab dem Zeitpunkt t=0 betätigt der Fahrzeugführer das Bedienelement 7 fortwährend und die Last der Kabelzüge 11 wird durch die elektromechanische Stelleinheit 1 linear mit der Zeit erhöht bis ein vorbestimmter Wert erreicht ist, der in Fig. 2 durch die Position 22 bezeichnet ist. Anschließend wird dieser Wert bis zum Zeitpunkt t=t_{prestatic} konstant gehalten (Position 23). Zum Zeitpunkt t=t_{prestatic} wird die Last der Kabelzüge 11 sofort auf den maximal zulässigen Wert erhöht, was in Fig. 2 mit Hilfe der Position 24 dargestellt ist. Mit dieser schlagartigen Erhöhung der Kabellast wird dem Fahrzeugführer vermittelt, dass sich der Betriebsmodus von dynamisch zu statisch verändern wird, wenn er weiterhin das Bedienelement 7 betätigt. Betätigt der Fahrzeugführer das Bedienelement bis zum Zeitpunkt t=t_{static} (Position 25), so wird davon ausgegangen, dass der Fahrzeugführer sein Kraftfahrzeug mit Hilfe der elektromechanischen Feststellbremse parken möchte und der Betriebsmodus der elektromechanischen Feststellbremse wechselt zu statisch. Wie bereits erwähnt ist während des statischen Betriebsmodus ein Lösen der Trommelbremsen 4 ausschließlich durch eine erneute Betätigung des Bedienelementes 7 möglich. Dabei muss die Zündung eingeschaltet sein.

Die elektromechanische Feststellbremse wird bei fehlenden Raddrehzahlwerten also nicht im dynamischen Betriebsmodus angesteuert, wenn der Fahrzeugführer die Zündung abschaltet und das Bedienelement 7 länger als eine vorbestimmte Zeitspanne von vorzugsweise t_{static}=10 sec betätigt. Der Fahrzeugführer kann sein Kraftfahrzeug dann sicher parken.

Außerdem wird die elektromechanische Feststellbremse bei fehlenden Raddrehzahlwerten ebenfalls nicht im dynamischen Betriebsmodus angesteuert, wenn der Fahrzeugführer die Zündung abschaltet und die letzten von der elektronischen Steuereinheit 6 empfangenen Raddrehzahlwerte auf eine Geschwindigkeit des Kraftfahrzeug von weniger als 10 km/h schließen lassen. Dieser Umstand weist darauf hin, dass der Fahrzeugführer nach Abschalten der Zündung sein Kraftfahrzeug parken möchte. Aus diesem Grund wird die elektromechanische Feststellbremse bei den eben beschriebenen Bedingungen im statischen Betriebsmodus angesteuert.

Bei fehlenden Raddrehzahlwerten wechselt der Betriebsmodus der elektromechanischen Feststellbremse von dynamisch zu statisch, wenn der Fahrzeugführer die Zündung abschaltet und den Zündschlüssel länger als eine vorbestimmte Zeitspanne von vorzugsweise 100 msec aus dem in Zusammenhang mit Fig. 1 erwähnten Zündschloss 27 entnimmt. Bei einer anschließenden Betätigung des Bedienelementes 7, werden die Trommelbremsen 4 mit Hilfe der elektromechanischen Stelleinheit 1 komplett zugespannt und diese Zuspannkraft aufrecht erhalten. Wird vor der Betätigung des Bedienelementes 7 der Zündschlüssel wieder in das Zündschloss 27 eingeführt, wird die elektromechanische Feststellbremse wieder im dynamische Betriebsmodus angesteuert.

Um den Fahrzeugführer zu informieren, ob die elektromechanische Feststellbremse im dynamischen oder im statischen Betriebsmodus angesteuert wird, ist eine Kontrolllampe 17 vorgesehen, die direkt mit der der elektromechanischen Feststellbremse zugeordneten elektronischen Steuereinheit 6 verbunden ist. Wenn der dynamische Betriebsmodus aktiv ist, so blinkt die Kontrolllampe 17 fortwährend. Wird die Feststellbremse im statischen Betriebsmodus angesteuert und betätigt der Fahrzeugführer das Bedienelement 7 so werden die Trommelbremsen 4 wie bereits erwähnt mit Hilfe der elektromechanischen Stelleinheit 1 komplett zugespannt und diese Zuspannkraft aufrecht erhalten. Das dadurch mögliche, sichere Abstellen des Kraftfahrzeugs wird dem Fahrzeugführer durch ein ständiges Leuchten der eben erwähnten Kontrolllampe angezeigt.

## Patentansprüche

1. Verfahren zum Betrieb einer elektromechanisch betätigbaren und/oder elektromechanisch verriegelbaren Feststellbremse für Kraftfahrzeuge, die im wesentlichen aus einem Bedienelement (7), einer elektronischen Steuereinheit (6), der Raddrehzahlwerte von Raddrehzahlsensoren (12, 13) zugeführt werden, mindestens einer Einheit (1) zur Erzeugung einer Zuspannkraft und mechanisch verriegelbaren Bremseinrichtungen (4) an wenigstens einer Achse besteht, wobei die Bremseinrichtungen (4) durch die Einheit (1) zuspannbar sind, **dadurch gekennzeichnet, dass** die Feststellbremse nach ihrer Aktivierung bei fehlenden Raddrehzahlwerten in einem ersten Betriebsmodus angesteuert wird, sofern die Bremseinrichtungen (4) nicht zugespannt sind, während die Feststellbremse andernfalls in einem zweiten Betriebsmodus angesteuert wird.

2. Verfahren nach Anspruch 1, **dadurch gekennzeichnet, dass** die Feststellbremse in einem ersten Betriebsmodus angesteuert wird, sofern im vorangegangenen Betriebsintervall bereits fehlende Raddrehzahlwerte erkannt wurden.

3. Verfahren nach Anspruch 1 oder 2, **dadurch gekennzeichnet, dass** die Feststellbremse in einem ersten Betriebsmodus angesteuert wird, sofern der Fahrzeugführer der Feststellbremse nicht den zweiten Betriebsmodus zuordnet.

4. Verfahren nach Anspruch 1 oder 2, **dadurch gekennzeichnet, dass** die Feststellbremse in einem zweiten Betriebsmodus angesteuert wird, wenn der Fahrzeugführer die Zündung abschaltet und das Bedienelement (7) länger als eine vorbestimmte Zeitspanne betätigt.

5. Verfahren nach Anspruch 1 oder 2, **dadurch gekennzeichnet, dass** die Feststellbremse in einem zweiten Betriebsmodus angesteuert wird, wenn der Fahrzeugführer die Zündung abschaltet und den Zündschlüssel mindestens für eine vorbestimmte Zeitspanne aus dem Zündschloss (27) entnimmt.

6. Verfahren nach einem der vorhergehenden Ansprüche, **dadurch gekennzeichnet, dass** die Zuspannkraft der Feststellbremse im ersten Betriebsmodus ausschließlich während der Betätigung des Bedienelementes (7) aufgebaut und aufrechterhalten wird und dass die Feststellbremse im zweiten Betriebsmodus bei Betätigung des Bedienelementes (7) mit maximal zulässiger Kraft zugespannt wird, wobei ein Lösen lediglich mittels erneuter Betätigung des Bedienelements (7) bei eingeschalteter Zündung möglich ist.

7. Elektromechanisch betätigbare und/oder elektromechanisch verriegelbare Feststellbremse für Kraftfahrzeuge, die im wesentlichen aus einem Bedienelement (7), einer elektronischen Steuereinheit (6), der Raddrehzahlwerte von Raddrehzahlsensoren (12, 13) zugeführt werden, mindestens einer Einheit (1) zur Erzeugung einer Zuspannkraft und mechanisch verriegelbaren Bremseinrichtungen (4) an wenigstens einer Achse besteht, wobei die Bremseinrichtungen (4) durch die Einheit (1) zuspannbar sind, **dadurch gekennzeichnet, dass** Mittel vorgesehen sind, die die Feststellbremse nach ihrer Aktivierung bei fehlenden Raddrehzahlwerten in einem ersten Betriebsmodus ansteuern, sofern die Bremseinrichtungen (4) nicht zugespannt sind, während die Feststellbremse andernfalls in einem zweiten Betriebsmodus angesteuert wird.

8. Feststellbremse nach Anspruch 7, **dadurch gekennzeichnet, dass** eine Kontrolllampe (17) vorgesehen ist, die den Fahrzeugführer darüber informiert, ob die Feststellbremse im ersten oder im zweiten Betriebsmodus angesteuert wird.

## Claims

1. Method for operating an electromechanically operable and/or electromechanically lockable parking brake for motor vehicles substantially comprising an operating element (7), an electronic control unit (6), to which are sent wheel speed values from wheel speed sensors (12, 13), at least one unit (1) for generating a brake application force, and electromechanically lockable brake devices (4) on at least one axle, with said brake devices (4) being adapted to be applied by the unit (1),
**characterized in that** after its activation, the parking brake is driven in a first operating mode when wheel speed values are missing, if the brake devices (4) are not applied, while the parking brake is driven in a second operating mode in a contrary case.

2. Method as claimed in claim 1,
**characterized in that** the parking brake is driven in a first operating mode if it has been detected already in the previous operating interval that wheel speed values are missing.

3. Method as claimed in claim 1 or 2,
**characterized in that** the parking brake is driven in a first operating mode if the operator does not assign the second operating mode to the parking brake.

4. Method as claimed in claim 1 or 2,
**characterized in that** the parking brake is driven in a second operating mode when the operator switches off the ignition and activates the operating element (7) for a time longer than a predetermined time.

5. Method as claimed in claim, 1 or 2,
**characterized in that** the parking brake is driven in a second operating mode when the operator switches off the ignition and removes the ignition key from the ignition lock (27) at least for a predetermined time.

6. Method as claimed in any one of the previous claims,
**characterized in that** the brake application force of the parking brake in the first operating mode is developed and maintained exclusively during the activation of the operating element (7), and **in that** a maximum admissible force is applied to the parking brake in the second operating mode upon activation of the operating element (7), and release thereof is possible only by means of a new activation of the operating element (7), with the ignition switched on.

7. Electromechanically operable and/or electromechanically lockable parking brake for motor vehicles substantially comprising an operating element (7), an electronic control unit (6), to which are sent wheel speed values from wheel speed sensors (12, 13), at least one unit (1) for generating a brake application force, and electromechanically lockable brake devices (4) on at least one axle, with said brake devices (4) being adapted to be applied by the unit (1),
**characterized in that** a means is provided driving the parking brake, after its activation, in a first operating mode when wheel speed values are missing, if the brake devices (4) are not applied, while the parking brake is driven in a second operating mode in a contrary case.

8. Parking brake as claimed in claim 7,
**characterized in that** a warning lamp (17) is provided informing the operator about whether the parking brake is driven in the first or the second operating mode.

## Revendications

1. Procédé d'exploitation d'un frein de stationnement à actionnement électromécanique et/ou à verrouillage électromécanique pour véhicule automobile, qui est essentiellement constitué d'un élément de commande (7), d'une unité de commande électronique (6) à laquelle sont amenées des valeurs de la vitesse de rotation des roues depuis des capteurs (12, 13) de vitesse de rotation des roues, d'au moins une unité (1), pour produire une force de serrage et de dispositifs de freinage (4) à verrouillage mécanique sur au moins un essieu, les dispositifs de freinage (4) pouvant être serrés par l'unité (1), **caractérisé en ce qu'**après son activation, le frein de stationnement est commandé, en l'absence de valeurs de la vitesse de rotation des roues, dans un premier mode de fonctionnement, si les dispositifs de freinage (4) ne sont pas serrés, tandis que dans le cas contraire le frein de stationnement est commandé dans un deuxième mode de fonctionnement.

2. Procédé selon la revendication 1, **caractérisé en ce que** le frein de stationnement est commandé dans un premier mode de fonctionnement si, au cours de l'intervalle de fonctionnement précédent, l'absence de valeurs de la vitesse de rotation des roues avait déjà été reconnue.

3. Procédé selon la revendication 1 ou 2, **caractérisé en ce que** le frein de stationnement est commandé dans un premier mode de fonctionnement si le conducteur du véhicule n'associe pas au frein de stationnement le deuxième mode de fonctionnement.

4. Procédé selon la revendication 1 ou 2, **caractérisé en ce que** le frein de stationnement est commandé dans un deuxième mode de fonctionnement si le conducteur du véhicule coupe l'allumage et actionne l'élément de manoeuvre (7) plus longtemps qu'un intervalle de temps prédéterminé.

5. Procédé selon la revendication 1 ou 2, **caractérisé en ce que** le frein de stationnement est commandé dans un deuxième mode de fonctionnement si le conducteur du véhicule coupe l'allumage et retire la clé de contact du contacteur d'allumage (27) au moins pendant un intervalle de temps prédéterminé.

6. Procédé selon l'une des revendications précédentes, **caractérisé en ce que** la force de serrage du frein de stationnement dans le premier mode de fonctionnement est constituée et maintenue pendant l'actionnement de l'élément de commande (7) et **en ce que** le frein de stationnement dans le deuxième mode de fonctionnement est serré avec la force maximale admissible pendant l'actionnement de l'élément de commande (7), un desserrage étant possible seulement par un nouvel actionnement de l'élément de commande (7) et allumage actif.

7. Frein de stationnement à actionnement électromécanique et/ou à verrouillage électromécanique pour véhicule automobile, qui est essentiellement constitué d'un élément de commande (7), d'une unité de commande électronique (6) à laquelle sont amenées des valeurs de la vitesse de rotation des roues depuis des capteurs (12, 13) de vitesse de rotation des roues, d'au moins une unité (1) pour produire une force de serrage et de dispositifs de freinage (4) à verrouillage mécanique sur au moins un essieu, les dispositifs de freinage (4) pouvant être serrés par l'unité (1), **caractérisé en ce que** sont prévus des moyens qui commandent le frein de stationnement après son activation et en l'absence de valeurs de la vitesse de rotation des roues, dans un premier mode de fonctionnement si les dispositifs de freinage (4) ne sont pas serrés, tandis que dans le cas contraire le frein de stationnement est commandé dans un deuxième mode de fonctionnement.

8. Frein de stationnement selon la revendication 7, **caractérisé en ce qu'**il est prévu une lampe témoin (17) qui informe le conducteur du véhicule sur le fait que le frein de stationnement est commandé dans le premier ou dans le deuxième mode de fonctionnement.
